# EUROPEAN PATENT APPLICATION

(11) **EP 4 123 171 A1**
(43) Date of publication of application: **25.01.2023**
(21) Application number: 21186356.8
(22) Date of filing: 19.07.2021
(51) Int. Cl.: F03D 9/19, F03D 80/00, C25B 1/04

(54) **OFFSHORE WIND TURBINE WITH A FLUID SUPPLY ASSEMBLY COMPRISING A HOSE AND A HOSE REEL**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

An offshore wind turbine (1) erected in a body of water comprising a generator (2), a foundation (5), a nacelle (6), a tower (4) having a first end mounted to the foundation (5) and a second end supporting the nacelle (6), an electrolytic unit (3) arranged above a water level (31) and electrically powered by the generator (2) to produce hydrogen (6) from an input fluid (9), in particular water, and a fluid supply assembly (21) for supplying the input fluid (9) to the electrolytic unit (3), wherein the fluid supply assembly (21) comprises a flexible hose (26) with a fluid inlet (23) configured to be submerged under the water level (31) and a hose reel (26) configured to be rotated for winding the hose (26) thereon.

## Description

The present invention relates to an offshore wind turbine with a fluid supply assembly. The present invention further relates to a method of supplying input fluid to an offshore wind turbine.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 130-765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine. A wind turbine comprising an electrolytic unit generates electrical power by means of the generator and hydrogen by means of the electrolytic unit driven by at least a part of the power of the wind turbine.

Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines.

The use of electrolytic units in combination with wind turbines is known from the prior art, for example in the document US 5,592,028 A, where a plurality of electrolysis cells are connected to a wind farm and produce hydrogen by means of the electricity produced by the generators of the wind turbines. Similarly, the document WO 2020/095012 A1 describes an offshore wind turbine system for the large-scale production of hydrogen, which includes a floating tower structure with a desalination unit and an electrolysis unit.

In a wind farm with an electrolytic unit, hydrogen is produced with an input fluid. For example, for offshore wind farms, the input fluid is seawater, which is desalinated before entering the electrolytic device. Alternatively, the offshore wind farm might be located on a lake or any water body and the input fluid is water, which is usually filtered prior to entering the electrolytic device. A problem offshore wind turbines face is that the input fluid has to be supplied to the platform where the electrolytic unit is arranged, where the height difference between the water level and the platform has to be overcome. This is achieved by means of a fluid supply assembly. Traditional fluid supply assemblies comprise a hose hanging in the water with a submerged pump. The hose is designed to protect the pump and the pipeline from external forces from the wind and the waves.

Hanging fluid supply assemblies have the risk of the hose colliding against the tower, thereby damaging itself and the tower due to strong winds. The hose is also exposed to harsh environmental conditions and has to overcome heights often over 20 meters above the water level, so a damage of the hanging fluid supply results in high costs of materials and working hours so as to replace damaged components.

It is an object of the invention to provide an offshore wind turbine with a fluid supply assembly that overcomes the problems known form the prior art.

This is achieved by an offshore wind turbine according to claim 1 and a method of supplying input fluid to an offshore wind turbine according to claim 15.

According to the invention, an offshore wind turbine erected in a body of water comprises a generator, a foundation, a nacelle, a tower having a first end mounted to the foundation and a second end supporting the nacelle, an electrolytic unit arranged above a water level and electrically powered by the generator to produce hydrogen from an input fluid, in particular water, and a fluid supply assembly for supplying the input fluid to the electrolytic unit. The fluid supply assembly comprises a flexible hose with a fluid inlet configured to be submerged under the water level and a hose reel configured to be rotated for winding the hose thereon.

The generator generates electric power and supplies the electrolytic unit with at least a part of the power generated, as both components are electrically coupled.

Due to the fluctuation of the power generation, depending for example on weather conditions and wind levels, it is difficult to foresee the power output of an offshore wind turbine to the electricity grid or to an energy storage device. By using a part of the energy produced by the generator to produce hydrogen, the fluctuations can be mitigated. The hydrogen can be taken out of the wind turbine by a system outlet coupled to the output of the electrolytic unit.

Hence, at least a part of the energy produced by the generator can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only hydrogen, is produced. The hydrogen produced is usually in a gaseous state, which can be compressed and/or mixed with other components to a liquid state which is easier to store and/or transport.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

The electrolytic unit is used to produce hydrogen from water. Hence, as the wind turbine is installed in the vicinity of water, i.e. a river or at the sea, the electrolytic unit can use this water as an input to the electrolytic unit to produce hydrogen and oxygen. It is however also possible to further process the hydrogen and get other compounds, such as methane or ammonia.

The water is extracted by means of the fluid supply assembly. Hence, the fluid supply assembly supplies the input fluid from a fluid inlet configured to be arranged below a water level to the electrolytic unit arranged above the water level, for example by means of a pump configured to pump the input fluid from the body of water and through the fluid connection between the fluid inlet and the electrolytic unit.

The hose of the fluid supply assembly is flexible to be able to wind the hose on the hose reel. Hence, by rotating the hose reel, the flexible hose can be lowered from a raised position to a lowered position or vice versa. The fluid supply assembly can comprise means to rotate the hose reel for winding the hose thereon and thereby changing from a lowered position of the hose to a raised position of the hose.

The raised position can be a position in which the hose is completely rolled over the water level and the lowered position is a position in which the fluid inlet of the hose is submerged under the water level.

In the lowered position, the hose can be hanging from the hose reel without any supporting or guiding means, i.e. it can be hanging free.

The hose can be for example a hollow tube which can be reinforced for a better durability.

According to a preferred embodiment of the invention, the offshore wind turbine further comprises a platform supporting at least a part of the electrolytic unit above the water level, wherein the hose reel is arranged at the platform.

With the dedicated platform, the electrolytic unit can be more easily mounted than for example by installing the electrolytic unit on the nacelle and at least a part of the electrolytic unit can be kept above the water level.

The platform provides for an open space where components such as the hose reel can be arranged. It is easily accessible by workers, hence simplifying maintenance works at the hose reel or the rotation of the hose reel if done manually. For example, the hose can be cleaned from marine growth much more easily if it is raised to the platform, as the hose reel is arranged at the platform.

According to another preferred embodiment of the invention, the hose is coated or comprises a cover to protect the hose. For example, the hose can have a cover from polyethylene to protect the hose and the foundation wall or the tower wall in case of impacts.

According to another preferred embodiment of the invention, the length of the hose is adjusted according to the water level. For example, the hose can be lowered below the low tide level to be all the time under the water level when the input fluid is needed. Alternatively, the hose can adjust according to the tidal range and the waves to be below the water level when the input fluid is needed and thereby having a minimal hose length, which is advantageous to prevent that the hose hits the foundation or the tower wall.

According to another preferred embodiment of the invention, the offshore wind turbine comprises a transition piece between the foundation and the tower, wherein the hose reel is arranged at the transition piece.

The transition piece is disposed on top of the foundation. A particularly preferred type of coupling is a transition piece disposed on top of a monopile, where the transition piece includes the platform disposed on an outer periphery of the transition piece.

According to another preferred embodiment of the invention, the hose reel is arranged at the foundation. Preferably, the hose reel is arranged close to the water level, hence at the foundation, to have a shorter hose hanging from the hose reel. This is advantageous, as the hose's oscillations due to wind and waves can be controlled better the shorter the hose is, thereby avoiding that the hose hits the tower or the foundation wall.

According to another preferred embodiment of the invention, the hose reel is arranged at the tower. Due to space reasons, it might be necessary to arrange the hose reel at the tower.

According to another preferred embodiment of the invention, the hose is formed of a polymer material or an epoxy material with a supporting fiber reinforcement to avoid corrosion.

According to another preferred embodiment of the invention, the hose is formed of glass fiber.

According to another preferred embodiment of the invention, the hose reel comprises a spool and a handle to turn the spool.

The spool may be a rotatable cylinder or core or drum which may be connected to the handle and which may rotate upon rotation of the handle. The handle may be a single-position non-folding handle; or may be a multi-position collapsible handle or crank which may be placed by the user in a lowered or folded position or in a raised or extended position, by utilizing a folding mechanism allowing the handle to fold or pivot.

By means of the handle, the hose reel can be manually rotated from a lowered position to a raised position or vice versa. A rotation of the handle causes a rotation of the spool about a common axis of rotation, which is generally parallel to the surface on which the hose reel is arranged. Such rotation causes the winding of the flexible hose. The flexible hose may be detachably connected to the spool by using a hose connector or other connection mechanisms, for example, a clip, a screw, a pair of screws, a pressure-based connector, a male/female connector, a forcible insertion of the flexible hose into a corresponding hole or cavity within the spool or other suitable connection mechanisms.

According to another preferred embodiment of the invention, a motor is operably coupled to the hose reel to turn it. Preferably, the motor is controlled automatically by a control unit to lower the hose when input fluid is needed and to raise the hose when no input fluid is needed. Advantageously, the hose reel comprises both a handle to turn the hose reel manually and a motor to turn to hose reel automatically. In case of failure of the motor, the hose reel can be turned manually with the handle.

According to another preferred embodiment of the invention, the hose reel is rotatably attached to a hose reel mount. The hose reel mount is a structure used for mounting the hose reel to another component such as the tower, the foundation or the platform. It also gives structural stability to the hose reel.

According to another preferred embodiment of the invention, the fluid supply assembly further comprises a submergible pump at or close to the fluid inlet.

Hence, within the hose or at the end of the hose, a submergible pump is installed to pump the fluid to the electrolytic unit.

According to another preferred embodiment of the invention, the pump is installed inside the hose, wherein the pump can be lifted through the hose for inspection and maintenance works. The pump can also be lowered through the hose. Additionally, the pump can also be raised to be above the water level to protect the pump against corrosion and the marine environment when it is not being used. This also limits the marine growth on the pump and on the hose.

The pump can be raised also due to harsh weather conditions, i.e. due to a storm or the like to protect the pump.

A crane can be installed to move the pump to a location where it can be serviced more easily.

According to another preferred embodiment of the invention, the fluid supply assembly further comprises a weight attached at or close to the fluid inlet. The weight stiffens the hose so as to have a straight hose and avoid that the hose impacts the tower wall, the foundation wall or other components. The weight also stabilizes the hose against waves, current or wind. The weight added depends on the site conditions.

According to another preferred embodiment of the invention, the fluid supply assembly further comprises a guiding means for guiding and supporting the hose. The guiding means are advantageous to keep the hose in position and avoid oscillations of the hose, which can result in impacts to the tower wall, the foundation wall or other components and in damage.

According to another preferred embodiment of the invention, the guiding means comprises a bell supported by a beam through which the hose is guided. The bell works as a funnel to easily catch the hanging hose when being lowered from the raised position to the lowered position below the water level. The beam can be attached to the foundation, to the tower or to any other component for providing stability and support to the guiding means.

According to another preferred embodiment of the invention, the guiding means comprises a hollow casing through which the hose is guided. Hence, the hose is contained in a hollow casing, for example a caisson, i.e. a watertight retaining structure.

The hollow casing can be dimensioned in such a way as to allow the hose to be raised and lowered within the hollow casing. Hence, the hollow casing is like a guiding tunnel guiding the hose from a raised position to a lowered position and vice versa.

According to another preferred embodiment of the invention, the hose is raised and lowered after a specific time or periodically for keeping the hollow casing clean. For example, the hose is moved up and down once a day to keep the hollow casing clean. The hose may also comprise a scraper to clear off any marine growth when lowered or raised in the hollow casing.

According to another preferred embodiment of the invention, the fluid supply assembly comprises a filter for filtering the input fluid. Hence, particles and other substances in the water are filtered prior to entering the electrolytic unit.

According to another preferred embodiment of the invention, the filter is installed inside the hose, wherein the filter can be lifted through the hose for cleaning, inspection and maintenance works.

According to another preferred embodiment of the invention, the fluid inlet is arranged in the lowered position of the hose at a distance sufficiently removed from the ground level for avoiding the introduction of sand or other substances from the ground level into the fluid inlet. The ground level is the level below the body of water, for example the seabed level. This method reduces the costs of filtering, as less energy and maintenance of the filters is needed.

According to another preferred embodiment of the invention, the fluid inlet is made from an antifouling material, such as copper, to avoid plant growth, in particular marine growth, on the fluid inlet. In particular, any inert material can be used as antifouling material to prevent the formation of plants on the fluid inlet, which obstructs the water flow.

Yet another aspect of the invention relates to a method of supplying input fluid to an offshore wind turbine comprising the step of lowering the flexible hose from a raised position above the water level to a lowered position below the water level in particular by turning the hose reel, and suctioning input fluid through the fluid inlet for supplying the electrolytic unit with the input fluid.

In order to facilitate the understanding of the characteristics of the invention and being an integral part of this specification, some drawing sheets are attached on which figures, with an illustrative but not limiting character, the following is represented:
Figure 1 shows a schematic view of an offshore wind turbine comprising a hose hanging from the electrolytic unit for the fluid supply.
Figure 2 shows an offshore wind turbine according to an embodiment of the invention comprising a flexible hose hanging from a hose reel.
Figure 3 shows a hose reel mounted on a platform of an offshore wind turbine.
Figure 4 shows a hose with a submergible pump at the fluid inlet located at an end of the hose.
Figure 5 shows a hose with a submergible pump and a weight attached at the fluid inlet.
Figure 6 shows a fluid supply assembly with a guiding means for guiding and supporting the hose, wherein the guiding means comprises two bells supported by beams.
Figure 7 shows a detailed view of a bell supporting the hose.
Figure 8 shows the arrangement of the hose reel on the foundation of the offshore wind turbine.
Figure 9 shows a fluid supply assembly with a guiding means for guiding and supporting the hose, wherein the guiding means comprises a bell and a hollow casing supported by beams.
Figure 10 shows a hose reel rotatably attached to a hose reel mount, wherein the hose reel can be manually rotated by means of a handle.
Figure 11 shows a hose reel rotatably attached to a hose reel mount, wherein the hose reel can be manually rotated by means of a handle or automatically rotated by means of a motor.

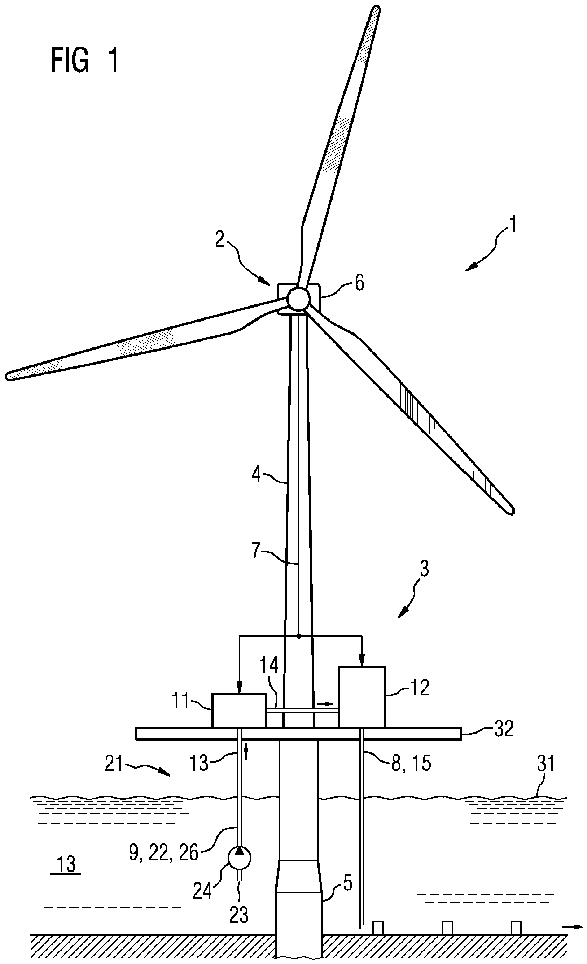

Figure 1 shows a schematic view of an offshore wind turbine 1 comprising a hose hanging from the electrolytic unit 3 for the fluid supply.

The offshore wind turbine 1 comprises a tower 4 on top of which a nacelle 6 is rotatably mounted. The offshore wind turbine 1 further comprises a hub which is connected to the nacelle 6. A plurality of blades is mounted on the hub. The hub is connected to a generator 2 and is rotatably mounted about a rotor axis by means of a main bearing. The offshore wind turbine 1 further comprises a platform 32 on which the electrolytic unit 3 is arranged above the water level 31. The offshore wind turbine 1 further comprises a foundation 5 on which the tower 4 is mounted. The foundation 5 is a monopile mounted to the floor of the body of water.

The power produced by the generator 2 is completely transferred to the electrolytic unit 3, but it would be also possible to connect the offshore wind turbine 1 to an electricity grid and transfer a part of the power produced by the generator 2 to the electricity grid. The electrolytic unit 3 comprises a desalination unit 11 and an electrolytic device 12, as well as a fluid connection between the desalination unit 11 and the electrolytic device 12 through which desalinated water 14 is transported. The electrolytic device 12 and the desalination unit 11 are both powered by the generator 2, which is connected to both devices by means of an electric connection 7.

The input fluid 9 for the electrolytic unit 3 is saltwater 13 taken of the sea of the offshore wind turbine 1 by means of a pump 24. Hence, the fluid supply assembly 21 supplies saltwater 13 to the electrolytic unit 3 by means of a hanging hose 26. The hose 26 hangs from the desalination unit 11 to the water body at the outer part of the fundament 5. The saltwater 13 enters the fluid supply assembly 21 through a fluid inlet 23 and is transported through the hose 26, which creates a fluid connection 22 between the fluid inlet 23 and the desalination unit 11 forming part of the electrolytic unit 3. The fluid inlet 23 and the pump 24 are submerged below the water level 31 to suction the saltwater 13.

The desalinated water 14 is the input fluid 9 of the electrolytic device 12. The electrolytic device has a hydrogen output 15 through which the hydrogen 8 generated is extracted. This hydrogen output 15 is connected to a hydrogen pipeline to transport the hydrogen 8 onshore. Alternatively, the hydrogen 8 could be filled in containers and transported onshore.

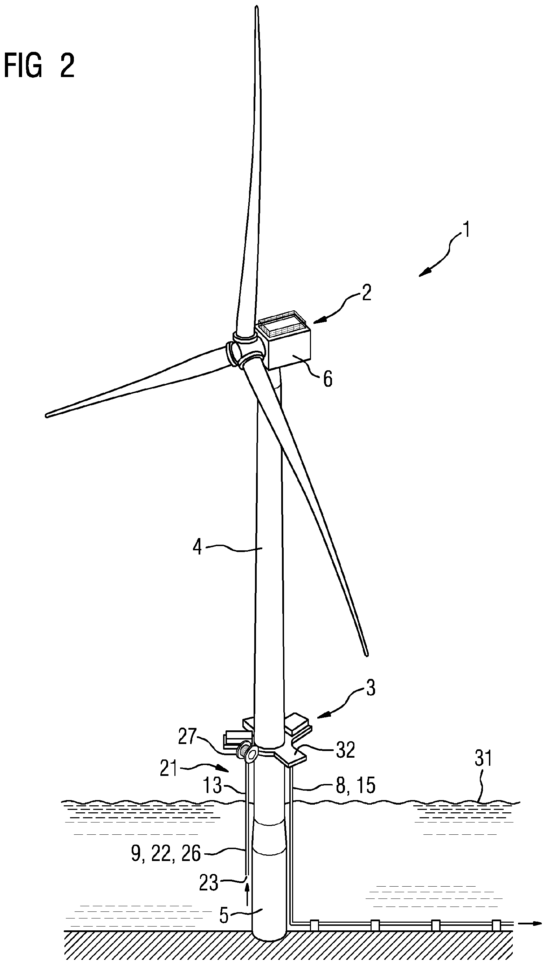

Figure 2 shows an offshore wind turbine 1 according to an embodiment of the invention comprising a flexible hose 26 hanging from a hose reel 27. By means of the hose reel 27, the hose 26 can be raised above the water level 31 and lowered below the water level 31.

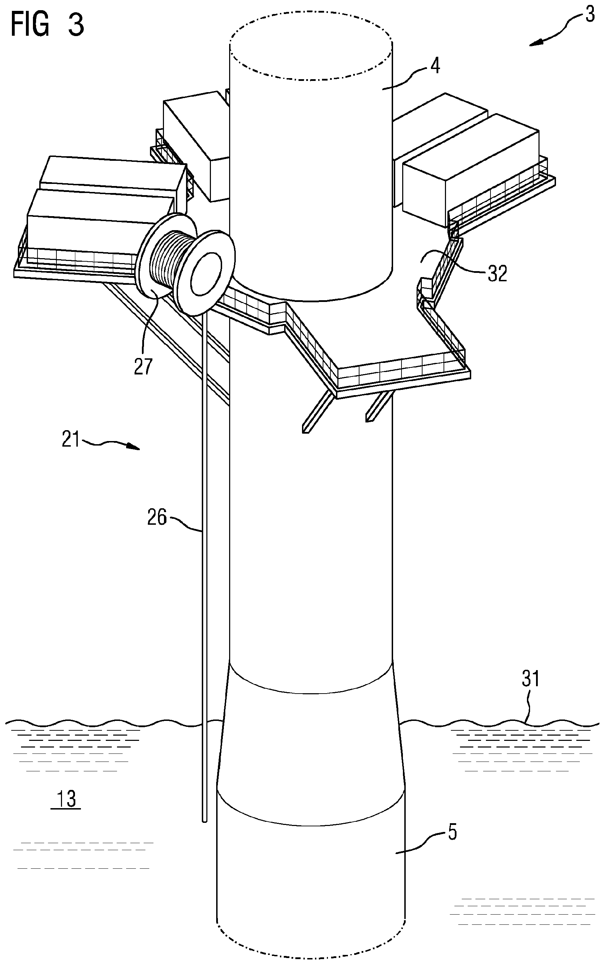

Figure 3 shows a hose reel 27 mounted on a platform 32 of an offshore wind turbine 1. The hose reel 27 is attached to the platform 32, which simplifies the service works on the hose 26, such as the cleaning of the hose 26 and the fluid inlet 23 from marine growth.

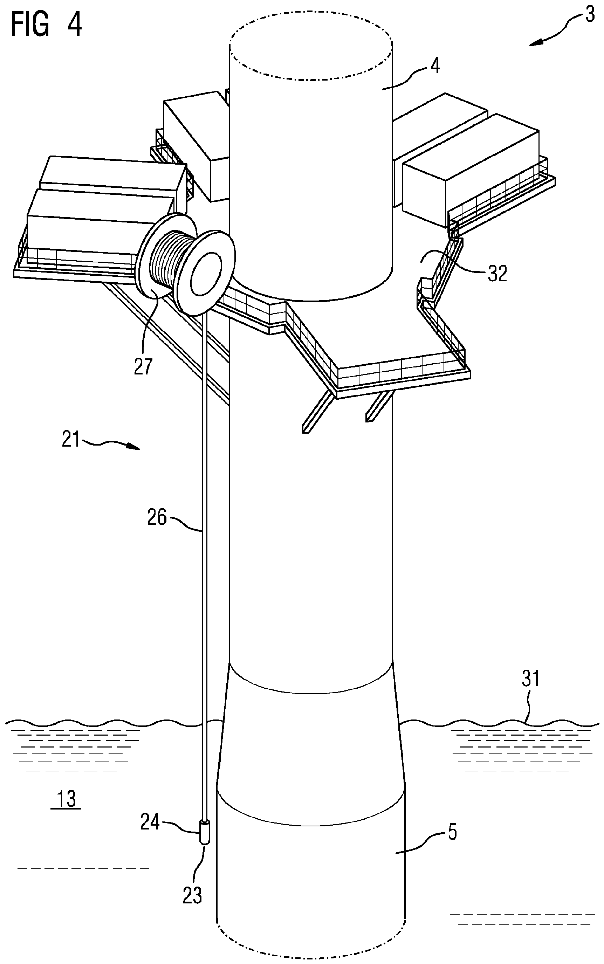

Figure 4 shows a hose 26 with a submergible pump 24 at the fluid inlet 23 located at an end of the hose 26. With the submergible pump 24, the input fluid 9 can be pumped from the water body to the electrolytic unit 3.

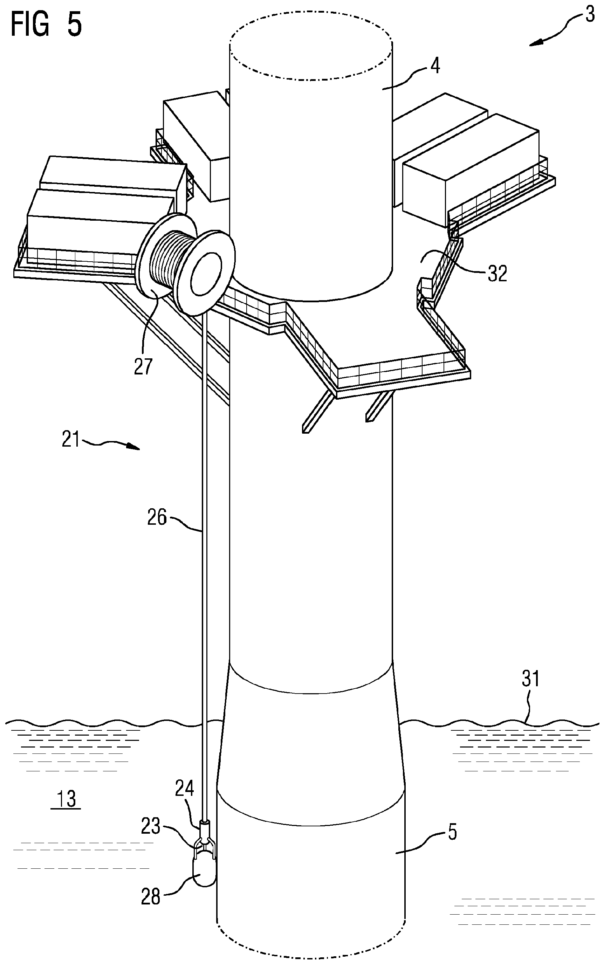

Figure 5 shows a hose 26 with a submergible pump 24 and a weight 28 attached at the fluid inlet 23. The weight 28 stiffens the hose 26 so as to have a straight hose 26 and avoid that the hose 26 impacts the tower 4, the foundation 5 or other components. The weight 28 also stabilizes the hose 26 against waves, current or wind.

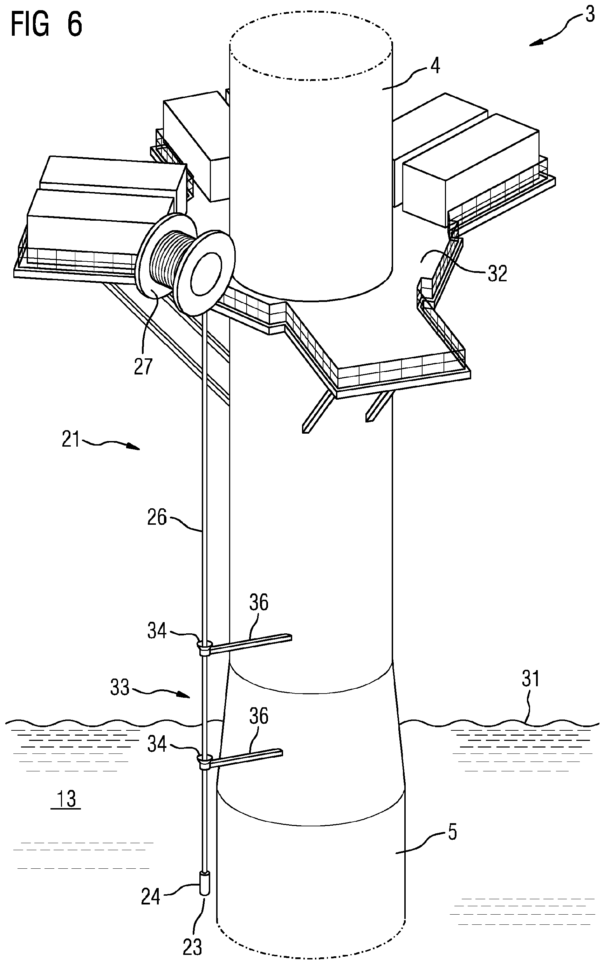

Figure 6 shows a fluid supply assembly 21 with a guiding means 33 for guiding and supporting the hose 26, wherein the guiding means 33 comprises two bells 34 supported by beams 36. The bell 34 works as a funnel to easily catch the hanging hose 26 when being lowered from the raised position to the lowered position below the water level 31. The beam is attached to the foundation 5 for providing stability and support to the guiding means 33.

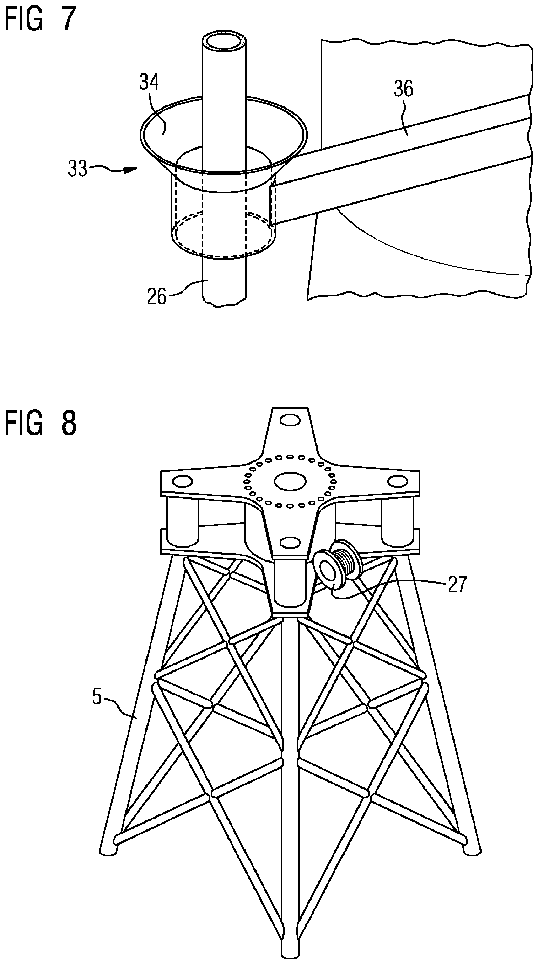

Figure 7 shows a detailed view of a bell 34 supporting the hose 26. The shape of the funnel makes it easier to catch the hose 26 being lowered.

Figure 8 shows the arrangement of the hose reel 27 on the foundation 5 of the offshore wind turbine 1. Depicted is a jacket frame foundation, but other foundations such as a monopile foundation, a tripod foundation, a gravity base foundation, a suction bucket formation, a tubular truss foundation or a tri-pile foundation can be used.

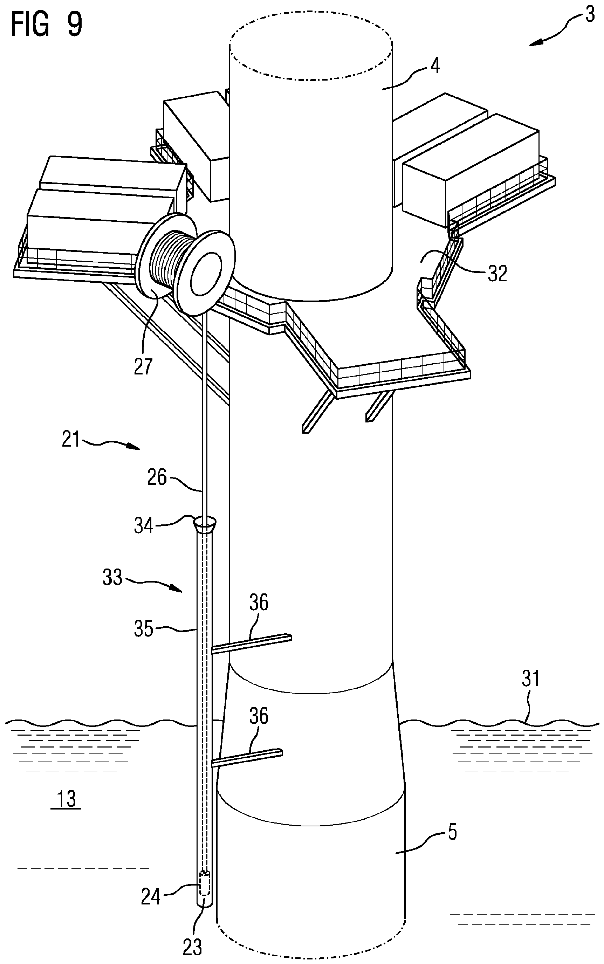

Figure 9 shows a fluid supply assembly 21 with a guiding means 33 for guiding and supporting the hose 26, wherein the guiding means 33 comprises a bell 34 and a hollow casing 35 supported by beams 36. The hollow casing 35 is dimensioned in such a way as to allow the hose 26 to be raised and lowered within the hollow casing 35. Hence, the hollow casing 35 is like a guiding tunnel guiding the hose 26 from a raised position to a lowered position and vice versa. A scraper can be added to the hollow casing 35 to clean the hose 26 when it is being lowered or raised.

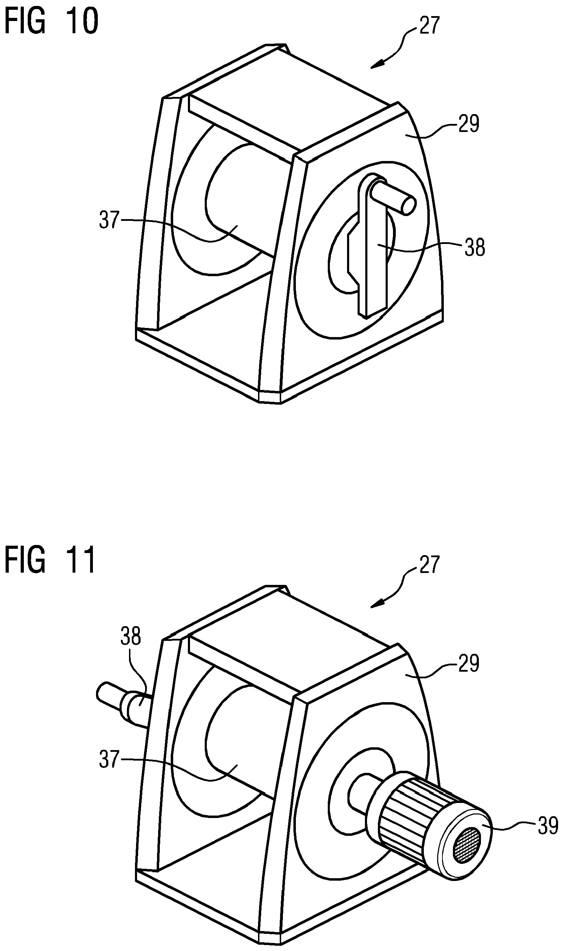

Figure 10 shows a hose reel 27 rotatably attached to a hose reel mount 29, wherein the hose reel 27 can be manually rotated by means of a handle 38. The handle 38 is connected to a spool 37 configured as a rotatable cylinder. The rotation of the spool 37 allow to wind and unwind the hose 26.

Figure 11 shows a hose reel 27 rotatably attached to a hose reel mount 29, wherein the hose reel 27 can be manually rotated by means of a handle 38 or automatically rotated by means of a motor 39. Both the motor 39 and the handle 38 are connected to a spool 37 configured as a rotatable cylinder. The rotation of the spool 37 allow to wind and unwind the hose 26.

### Reference List

- 1: Offshore wind turbine
- 2: Generator
- 3: Electrolytic unit
- 4: Tower
- 5: Foundation
- 6: Nacelle
- 7: Electrical connection
- 8: Hydrogen
- 9: Input fluid

- 11: Desalination unit
- 12: Electrolytic device
- 13: Saltwater
- 14: Desalinated water
- 15: Hydrogen output

- 21: Fluid supply assembly
- 22: Fluid connection
- 23: Fluid inlet
- 24: Pump
- 25: Filter
- 26: Hose
- 27: Hose reel
- 28: Weight
- 29: Hose reel mount

- 31: Water level
- 32: Platform
- 33: Guiding means
- 34: Bell
- 35: Hollow casing
- 36: Beam
- 37: Spool
- 38: Handle
- 39: Motor

## Claims

1. An offshore wind turbine (1) erected in a body of water comprising
a generator (2),
a foundation (5),
a nacelle (6),
a tower (4) having a first end mounted to the foundation (5) and a second end supporting the nacelle (6),
an electrolytic unit (3) arranged above a water level (31) and electrically powered by the generator (2) to produce hydrogen (6) from an input fluid (9), in particular water, and a fluid supply assembly (21) for supplying the input fluid (9) to the electrolytic unit (3),
**characterized in that** the fluid supply assembly (21) comprises a flexible hose (26) with a fluid inlet (23) configured to be submerged under the water level (31) and a hose reel (26) configured to be rotated for winding the hose (26) thereon.

2. The offshore wind turbine (1) according to claim 1, **characterized in that** said offshore wind turbine (1) further comprises a platform (32) supporting at least a part of the electrolytic unit (3) above the water level (31), wherein the hose reel (27) is arranged at the platform (32).

3. The offshore wind turbine (1) according to claim 1, **characterized in that** the hose reel (27) is arranged at the foundation (5).

4. The offshore wind turbine (1) according to claim 1, **characterized in that** the hose reel (27) is arranged at the tower (4) .

5. The offshore wind turbine (1) according to any of the preceding claims, **characterized in that** the hose reel (27) comprises a spool (37) and a handle (38) to turn the spool (37).

6. The offshore wind turbine (1) according to any of the preceding claims, **characterized in that** a motor (39) is operably coupled to the hose reel (27) to turn it.

7. The offshore wind turbine (1) according to any of the preceding claims, **characterized in that** the hose reel (27) is rotatably attached to a hose reel mount (29).

8. The offshore wind turbine (1) according to any of the preceding claims, **characterized in that** the fluid supply assembly (21) further comprises a submergible pump (24) at or close to the fluid inlet (23).

9. The offshore wind turbine (1) according to any of the preceding claims, **characterized in that** the fluid supply assembly (21) further comprises a weight (28) attached at or close to the fluid inlet (23).

10. The offshore wind turbine (1) according to any of the preceding claims, **characterized in that** the fluid supply assembly (21) further comprises a guiding means (33) for guiding and supporting the hose (26).

11. The offshore wind turbine (1) according to claim 10, **characterized in that** the guiding means (33) comprises a bell (34) supported by a beam (36) through which the hose (34) is guided.

12. The offshore wind turbine (1) according to claim 10 or 11, **characterized in that** the guiding means (33) comprises a hollow casing (35) through which the hose (34) is guided.

13. The offshore wind turbine (1) according to any of the preceding claims, **characterized in that** the fluid supply assembly (21) comprises a filter (25) for filtering the input fluid (9).

14. The offshore wind turbine (1) according to any of the preceding claims, **characterized in that** the fluid inlet (23) is arranged in the lowered position of the hose (26) at a distance sufficiently removed from the ground level for avoiding the introduction of sand or other substances from the ground level into the fluid inlet (23).

15. Method of supplying input fluid (9) to an offshore wind turbine (1) according to any of the preceding claims, the method comprising the steps of:
- lowering the flexible hose (23) from a raised position above the water level (31) to a lowered position below the water level (31) in particular by turning the hose reel (27), and
- suctioning input fluid (9) through the fluid inlet (23) for supplying the electrolytic unit (3) with the input fluid (9).
